# EUROPEAN PATENT SPECIFICATION

(11) **EP 1 228 164 B1**
(45) Date of publication and mention of the grant of the patent: **13.10.2004**
(21) Application number: 00948042.7
(22) Date of filing: 10.07.2000
(51) Int. Cl.: C10B 53/02, C10J 3/00

(54) **METHOD AND APPARATUS FOR REDUCING GREENHOUSE GASES**
VERFAHREN UND VORRICHTUNG ZUR REDUKTION VON TREIBHAUSGASEN
PROCEDE ET APPAREIL DE REDUCTION DES GAZ A EFFET DE SERRE

(30) Priority: 08.07.1999 FI 991566
(43) Date of publication of application: 07.08.2002
(73) Proprietor: Biolentina Oy, 02160 Espoo (FI)
(72) Inventor: AHO, Yrjö, FIN-02160 Espoo (FI)
(74) Representative: LEITZINGER OY
(86) International application number: PCT/FI2000/000631
(87) International publication number: WO 2001/004235

(56) References cited:
- EP-A1- 0 671 453
- EP-A2- 0 905 213
- WO-A1-89/09809
- DE-A1- 4 416 340
- DE-A1- 4 437 246
- US-A- 5 725 738

## Description

The invention relates to a method for reducing discharges of greenhouse gases, especially carbon dioxide, wherein carbonaceous materials, wood, pieces of vegetation, products made therefrom, and particularly vegetative and municipal wastes poorly suitable for energy production, are treated in such a way that the release of carbon dioxide back to the atmosphere is substantially reduced and restrained, said method comprising
- carbonization of an organic mass by heating the same in an oxygen-free or limited oxygen volume to charcoal, the amount of which is more than 50% of the carbon content of the dry mass matter, and to a gas mixture which is burned
- recovery of primary energy from the gases in as heat exchanger, and
- condensig the water vapour from the gases in a pressureless or pressurized condition.

The invention relates also to an apparatus applying the method for reducing discharges of greenhouse gases, especially carbon dioxide, wherein carbonaceous materials, wood, pieces of vegetation, products made therefrom, and particularly vegetative and municipal wastes poorly suitable for energy production, are treatable in such a way that the release of carbon dioxide back to the atmosphere is substantially reduced and restrained, said apparatus comprising a charring reactor, in which an organic mass is carbonizable by heating in an oxygen-free or limited oxygen volume to charcoal, the amount of which is more than 50% of the carbon content of the dry mass matter, and to a gas mixture, an afterburner for burning the gas mixture and a heat exchanger for recovering energy, whereafter the flue gases and what is left unburnt of the gas mixture are adapted to be condensed in a pressureless or pressurized condition.

This kind of method and apparatus is disclosed in document EP-A-0671453. Biomass is heated in the absence of oxygen, and exhaust gas is combusted at least in part to produce a gas of a temperature of 800° to 1400°C. A partial stream of the combustion gas may be used as a preheating gas for drying the biomass. The preheating gas leaves the preheating zone at a temperature of 105°C.

The amount of greenhouse gases, such as carbon dioxide or CO₂, has increased enormously over the past 100 years, which, according to current understanding, is one of the factors contributing to the warming of global climate. Climate warming and powerful industrial development have occurred during the same period, which also involves the increased use of fossil fuels and, thus, the release of especially CO₂ into the atmosphere, the annual rate of its release to the atmosphere being approximately 28 billion tons.

Another temperature-balance upsetting change is partly a result of the destruction of forests (renewable natural resources). Although forests are currently increasing in industrialized countries, the effective rain forest areas are respectively dwindling even at a faster rate.

The amount of CO₂ bound in the annual photosynthesis reaction of flora is about 180 billion tons. The same volume is released primarily as a result of decomposition, the cycle time being 50-100 years on average. The long cycle or turnover time of renewable fuels, such as wood, speaks in itself for the deployment thereof. On the other hand, the consequences of the deployment thereof shall not be essentially visible until after the lapse of said cycle time, i.e. about 50-100 years, which is too long a time in view of international agreements, such as the Kioto agreement on limiting discharges of carbon dioxide.

Atmospheric warming leads to an increase in the content of water vapour, which in its part absorbs more heat, resulting in rising temperature and thus enhancing the impact of CO₂.

After the above problems were discovered, methods have been developed for restraining and curbing the release of CO₂. Several alternative methods are basically prior known, for example the use of solar, wind and atomic energy. The exploitation of solar and wind energy is only at an early developing stage and thus far expensive. Liquefaction and storage of CO₂ is also inconvenient to carry out because of its poor handling properties.

The Kioto agreement proposes the binding of CO₂ by means of algal growth. Another feasible solution is the expansion of forest areas. However, the impact of these solutiions is insufficient over a short term, although this is an important solution for reaching a balance over a longer term (50-200 years).

A method and an apparatus of the foregoing type are prior known from the patent publication US-5,725,738. It suggests that a biomass be carried through the process on trolleys. The condensable component of discharging gases is separated from the non-condensable component in condenser cyclones. The temperature applied in the preheating of a biomass is so high (120°C-250°C) that the evaporation heat of water vapour could not be recovered, i.e. the discharging gases could not be efficiently exploited in the preheating of a biomass.

The present invention relates to a method and an apparatus capable of providing an effective and economically attractive solution for reducing discharges of greenhouse gases.

In order to achieve this objective, a method of the invention is principally characterized in that the heat released in the condensation of a gas mixture is exploited in the heating and drying of materials to be fed into the process on a countercurrent principle for recovering also the evaporation heat released in the condensation of water vapour, and water formed in the countercurrent heater is discharged into a collector unit.

Furthermore, an apparatus for applying the method is principally characterized in that the thermal energy released in the condensation of gases is adapted to be exploited in the heating and drying of materials to be fed into the process by means of a countercurrent heater for recovering also the evaporation heat from the condensation of water vapour, the countercurrent heater being in communication with the charring ractor by way of a supply duct (41) for the organic matter, the apparatus further comprising a collector unit (11) for receiving water from the countercurrent heater. The resulting carbon is exploitable especially in the purification of bodies of water and as a soil conditioner.

The solution of the invention is attractive in terms of energy economy, since a considerable amount of energy can be efficiently exploited at a low temperature. Moreover, the material can be fed into the apparatus without any pre-drying.

In the present invention, the reduction of discharges of greenhouse gases is thus based on the carbonization or charring of organic matters, the excellent stability of carbon in nature slowing down substantially the circulation time of charcoal. When burning organic compounds, the carbon dioxide (CO₂) releases immediately, when the same are decayed by microbes, the carbon dioxide has a retention of decades, but when the same are carbonized, the retention is centuries, perhaps millennia. A further substantial advantage gained by the method is the small amount and composition of a discharge gas produced in carbonization or charring. The composition contains very little carbon dioxide and nitrogen. The main portion consists of water vapour, the condensation of which is preferably effected by means of cooling and a possible increase of pressure. This results in a highly efficient recovery of energy, nor is it hardly at all affected by the moisture of a material fed into the process.

The process is preferably capable of exploiting materials normally poorly suitable for the production of energy, such as municipal waste and tree branches, leaves, brushwood, stumps and roots, which can be driven into the process without drying through a crushing plant. All organic matter is acceptable, such as wood, plant parts, products made therefrom and, by means of plant arrangements, also waste oils and plastics.

The method eliminates most of the landfill problems and does it economically in an energy-producing manner, in addition to the most important objective, the reduction of CO₂-discharges.

The process can be modified to be more complete in facilities serving major population centres, but also to be simpler for small capacities, with regard to transportation costs.

Preferred embodiments of the invention are set forth in the non-independent claims.

The invention will now be described with reference to the accompanying drawings, in which
- fig. 1: shows schematically one embodiment for a carbonization process; and
- fig. 2: shows an example of a heat recovery plant for drying and preheating a mass to be fed into the process.

The carbonization apparatus comprises a countercurrent heater, designated with reference numeral 1. The countercurrent heater 1 is in communication with a carbonization or charring reactor 2 by way of a supply duct 41 for organic matter. The charring reactor 2 is in communication with separate further processing equipment for materials, charcoal 20 and a gas mixture 30, produced therein.

The further processing equipment for charcoal 20 includes a cooler 3, a screen 4, a fluidized bed 5, a washing unit 6, and a pelletizing unit 7, all in communication with each other. The further processing equipment for the gas mixture 30 includes an afterburner 8, a heat exchanger 9, a countercurrent heater 1, a washing unit 10, and a collector unit 11, all in communication with each other.

The actual carbonization of organic matter takes place in the charring reactor 2. Generally, all organic matters are suitable for use in the process. In particular, the materials may comprise landfill waste, agricultural vegetation waste, tree branches and barks, brushwood, organic household refuse, packing boards, and to some extent, also plastics.

The heating of organic matter in the reactor 2 is performed in conditions that are oxygen-free or contain a limited amount of oxygen. Oxygen is received in the reactor 2 primarily along with the supplied organic matter. If necessary in view of controlling the process, the supply of oxygen can nevertheless be regulated artificially. The end product from a resulting, heat-sustaining or exothermal carbonization or charring reaction consists primarily of the charcoal 20 and the gas mixture 30, the latter containing principally nitrogen gas, vapourized water, as well as a small amount of CO₂. As inflammable components, the gas mixture 20 further contains carbon monoxide, hydrogen, methane, acetone, and acetic acid.

The charring reaction is produced in the reactor 2 at certain temperatures. Preferably, this takes place at temperatures of 350-600°C. At lower temperatures the organic matter does not carbonize sufficiently well, and at higher temperatures the surface activity of resulting charcoal 20 will be weaker. For this reason, the carnonization is preferably effected at temperatures of 400-500°C. The wood material to be fed into the process has a dry matter content with about 40% of carbon and the organic waste material has a dry matter content with about 35% of carbon. At the above-mentioned temperatures, the organic matter has more than 50%, yet most preferably about 75-90% of its carbon content convert into the charcoal 20.

The resulting charcoal 20 is separated from the gas mixture 30 and carried along passages 42a, 42b to the cooler 3. The separation of coal dust migrating into a duct 42 along with the gas mixture 30 can be effected by using e.g. cyclones 13 in conjunction with the reactor 2. A condensation agent for the cooler 3, for example water, is separately supplied to the cooler 3. The thermal energy of charcoal 20 present in the cooler 3 transfers into a condensation agent 21, which is carried along a passage 42c to the countercurrent heater 1. Thus, the thermal energy of charcoal 20 will be exploited for the drying and heating of materials to be fed into the process.

At this point, the charcoal material passed through the cooler 3 is naturally not pure carbon, but contains various impurities and non-flammable materials, such as sand and metals, which are separated from charcoal 20. This is preferably achieved by means of some appropriate separation process, comprising for example a vibrating screen 4, a fluiidized bed 5, capable of separating coarse impurities, for example sand, from charcoal.

This is followed by advancing the charcoal 20 along a passage 42d and by washing it in a washing unit 6. The charcoal 20 is carried further along a passage 42e to a pelletizing unit 7, in which the charcoal 20 is converted (pelletized) appropriately for various applications.

If the charcoal does not find suficient use in water treatment or as a soil conditioner, it can be stored and substituted for fossil fuels after the greenhouse effect is under control.

The gas mixture 30 separated from the charcoal 20 is delivered along a passage 43a to an afterburner 8. Flue gases produced in the afterburner 8 and a non-flammable portion of the gas mixture 30 are carried along a passage 43b to a heat exchanger 9. The heat exchanger 9 is used for the substantial recovery of thermal energy, which is then used for electricity and/or district heating. This is followed by delivering the flue gases and the non-flammable portion of the gas mixture 30 along a passage 44 to a countercurrent heater 1, wherein water vapour liquefies from the gas mixture 30 and the thermal energy is used in the heating and drying of an organic matter to be fed into the process. The liquid is discharged from the countercurrent heater 1 by way of an outlet 46 to a water collector unit 11. Heat flows arriving in the countercurrent heater 1 along the passages 44 and 42c are adjusted in such a way that, at the inlet end of the countercurrent heater 1, which is provided with a supply conveyor 40, the temperature of flue gases and the like residual gases is less than 100°C, preferably less than 90°C, most preferably within the range of 30-50°C.

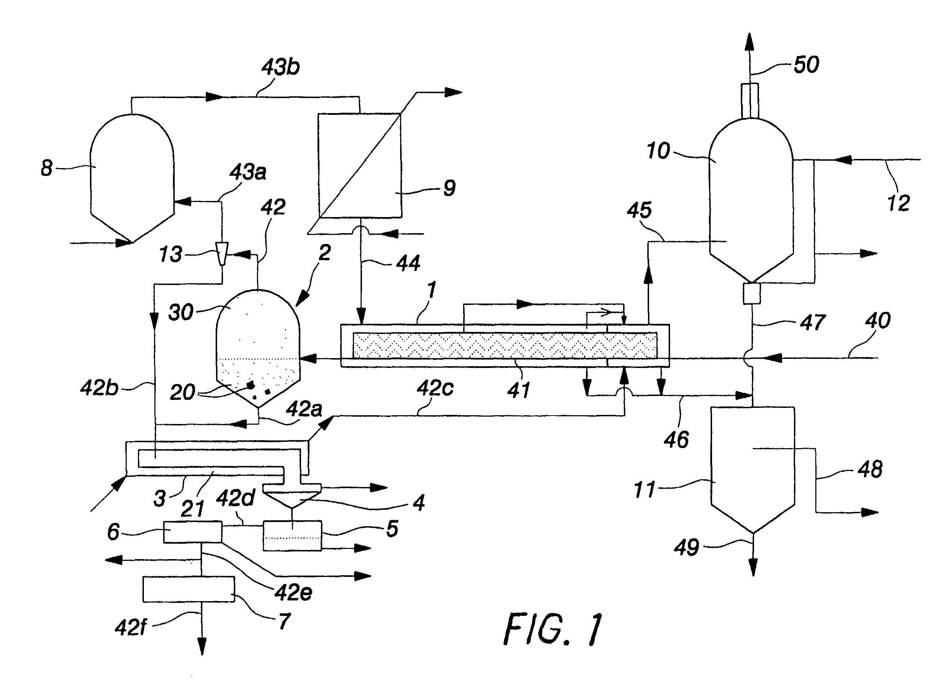

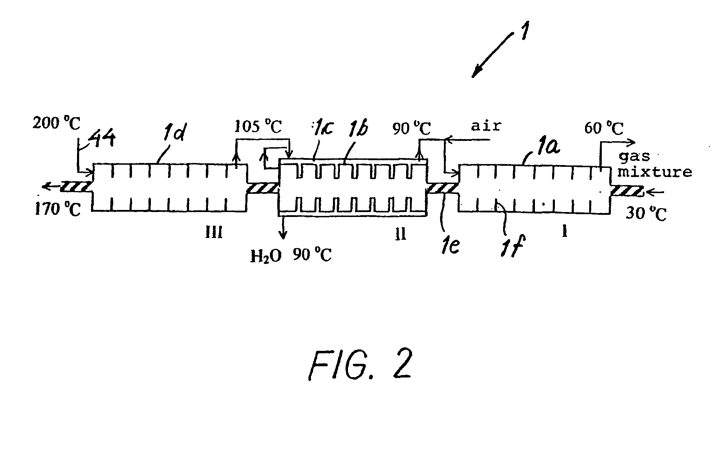

Fig. 2 shows an example of a heat recovery unit, i.e. the countercurrent heater 1 of fig. 1.

The crushed material, landfill mass, milled peat and vegetative wastes, such as branches, leaves, stumps, roots, straws etc., are fed in a wet condition into the countercurrent dryer 1.

The apparatus comprises three rotating cylinders or drums 1a, 1b+1c and 1d, which divide the countercurrent dryer 1 functionally and structurally in three separate sections I, II and III. Mass is delivered into the drum 1a for heating and drying the same. The cylinders are set in an inclined position, whereby the solid mass advances while rotating. The cylinder walls are provided with helical guide vanes 1f for addusting the advancing speed, especially for heavier pieces. The mass is carried by means of a screw conveyor 1e from section I into section II, in which most of the evaporation of water takes place. In section III, the mass heats up to a temperature of 150-170°C and is delivered further into the carbonization chamber 2.

After the recovery of primary energy, the counterflowing flue gas rich in water vapour is fed at a temperature of 170-200°C into section III. The gas passes from III into the mantle of II, i.e. in between the drum 1a and a shell 1c, in which is received also the water vapour formed in II. The water condensed in the mantle contains impurities. The water is passed to a further treatment. The gas mixture passing from the mantle into section I is supplemented with warm air. The amount of air is optimized on the basis of the temperature and relative humidity of the gas mixture. The discharging gas, having a temperature of about 30-60°C, is scrubbed by washing and/or carbon filtration.

In cylinder II, it is preferable to increase a temperature difference between a mantle defined by the shell 1c and a material space defined by the drum 1b by raising a little pressure within the mantle and by lowering the same in the evaporation space.

It is also possible to use a heat exchanger between sections II and I, whereby heat is transferred to dry air which is guided into the cylinder 1a.

The condensation of water can also be performed in a heat exchanger (not shown).

In the drum 1d and 1a, the discharge gases are in a direct contact with a mass to be fed, since in the drum 1d the gases have a temperature which is sufficiently high for water vapour not to condense, and the gas arriving in the drum 1a is substantially stripped of water vapour and the gas is supplemented with hot air.

An operating benefit offered by rotating drums is that the conveyance of a miscellaneous solid material and the transfer of heat are readily feasible in a continuous process.

The nitrogen gas remaining from the gas mixtrure 30 and a small amount of CO₂ and water are removed from the countercurrent heater 1 by way of a discharge channel 45 to a washing unit 10. This mixture is left with a minor amount of other impurities, which can be removed by normal gas cleaning methods. A detergent composition is fed to the washing unit 10 along a supply channel 12 arranbged for the purpose. Impurities remaining in the detergent composition are discharged along a supply channel 47 to the collector unit 11. A majority of the impurities (oils, salts, and deposits) are present in the receiver 11 of waters and treated separately. The collector unit 11 is used for separating water and other substances from each other. Water is carried for a further treatment along a supply channel 49 and other substances are carried for a further treatment along a supply channel 48. The amount of flue gas to be released into the atmosphere along a discharge channel 50 is comparatively small and very clean. For the most part, it comprises nitrogen, containing small amounts of CO₂, water, and impurities.

## Claims

1. A method for reducing discharges of greenhouse gases, especially carbon dioxide, wherein carbonaceous materials, wood, pieces of vegetation, products made therefrom, and particularly vegetative and municipal wastes poorly suitable for energy production, are treated in such a way that the release of carbon dioxide back to the atmosphere is substantially reduced and restrained, said method comprising:
- carbonization of an organic mass by heating the same in an oxygen-free or limited oxygen volume to charcoal (20), the amount of which is more than 50% of the carbon content of the dry mass matter, and to a gas mixture (30) which is burned
- recovery of primary energy from the gases in a heat exchanger (9), and
- condensing the water vapour from the gases in a pressureless or pressurized condition, **characterized in that** the heat released in the condensation of a gas mixture is exploited in the heating and drying of materials to be fed into the process on a countercurrent principle for recovering also the evaporation heat released in the condensation of water vapour, and water formed in the countercurrent heater is discharged into a collector unit (11).

2. A method as set forth in claim 1, **characterized in that** the organic mass is charred in an oxygen-free or limited-oxygen containing reactor (2), at least the charcoal (20) and the gas mixture (30) formed in an exothermal reaction created therein being separated from each other for a further treatment, and that the resulting charcoal (20) is exploited in the purification of bodies of water and as a soil conditioner.

3. A method as set forth in claim 1 or 2, **characterized in that** the charcoal (20) formed in the reactor (2) is cooled, separated from non-charring substances by means of a screen (4) and/or a fluidized bed (5), washed, and converted to suit various applications in such a way that the thermal energy released in conjunction with the cooling of the charcoal (20) is exploited for the drying and/or heating of materials to be fed into the process.

4. A method as set forth in any of claims 1-3, **characterized in that** the gas mixture (30) formed in the reactor (2) is burned in an afterburner (8) and the resulting energy is used as electrical and/or thermal energy.

5. A method as set forth in any of claims 1-4, **characterized in that** all gases discharging from the process are scrubbed.

6. An apparatus for reducing discharges of greenhouse gases, wherein carbonaceous materials, wood, pieces of vegetation, products made therefrom, and particularly vegetative and municipal wastes poorly suitable for energy production, are treatable in such a way that discharges of greenhouse gases, especially the release of carbon dioxide back to the atmosphere, are substantially reduced and restrained, said apparatus comprising a charring reactor (2), in which an organic mass is carbonizable by heating in an oxygen-free or limited oxygen volume to charcoal (20), the amount of which is more than 50% of the carbon content of the dry mass matter, and to a gas mixture (30), an afterburner (8) for burning the gas mixture and a heat exchanger (9) for recovering energy, whereafter the flue gases and what is left unburnt of the gas mixture (30) are adapted to be condensed in a pressureless or pressurized condition, **characterized in that** the thermal energy released in the condensation of gases is adapted to be exploited in the heating and drying of materials to be fed into the process by means of a countercurrent heater (1) for recovering also the evaporation heat from the condensation of water vapour, the countercurrent heater being in communication with the charring ractor by way of a supply duct (41) for the organic matter, the apparatus further comprising a collector unit (11) for receiving water from the countercurrent heater.

7. An apparatus as set forth in claim 6, **characterized in that** the charcoal (20) formed in the reactor (2) is cooled in a cooler (3), separated from non-charring substances by means of a screen (4) and/or a fluidized bed (5), scrubbed in a washing unit (6), and converted in a pelletizing unit (7) appropriately for various applications, and that the thermal energy released in conjunction with the cooling of the charcoal (20) is adapted to be exploitable in the heating and drying of materials to be fed into the process.

8. An apparatus as set forth in claim 6 or 7, **characterized in that** the countercurrent heater (1) comprises at least two rotatable cylinders or drums (1a, 1b+1c, 1d), in the first (1d, 1a) of said drums the flue gases being in a direct contact with a mass to be fed and the second drum (1b+1c), wherein the temperature of gases to be discharged falls below 100°C and water vapour condenses to water, is provided with a shell or mantle (1c), which is located outside the material-space defining drum (1b) and in which the discharge gas travels without coming to contact with the material.

9. An apparatus as set forth in claim 8, **characterized in that** the mantle of said second drum (1b+1c) is provided with a water outlet, as well as with an outlet for remaining gases, to a third drum (1a), the mass being delivered therein in a wet condition and the gas mixture passing therein being adapted to be supplemented with warm air.

10. An apparatus as set forth in claim 8 or 9, **characterized in that** between the drums (1a, 1b+1c, 1d) are conveyor screws (1e), that the drums are in an inclined position and sloping in the feeding direction, and that the drums are provided with helical guide vanes (1f) enhancing the feeding of mass.

## Patentansprüche

1. Verfahren zur Reduktion des Ausstoßes von Treibhausgasen, insbesondere Kohlendioxid, wobei kohlenstoffhaltige Materialien, Holz, Pflanzenteile, daraus hergestellte Produkte, und insbesondere Pflanzenabfälle und Siedlungsabfälle, die kaum zur Energieproduktion geeignet sind, derart behandelt werden, dass die Freisetzung von Kohlendioxid zurück in die Atmosphäre wesentlich reduziert und eingeschränkt wird, wobei das Verfahren die folgenden Schritte umfasst:
- Karbonisieren einer organischen Masse durch Aufheizen derselben in einem sauerstofffreien Volumen oder einem Volumen mit begrenztem Sauerstoff zu Kohle (20), deren Menge mehr als 50% des Kohlenstoffgehalts der Trockenmasse beträgt, und zu einer Gasmischung (30), die verbrannt wird,
- Rückgewinnung von Primärenergie aus den Gasen in einem Wärmetauscher (9), und
- Kondensieren des Wasserdampfes aus den Gasen drucklos oder unter Druck, **dadurch gekennzeichnet, dass** die bei der Kondensation der Gasmischung freigesetzte Wärme bei der Erwärmung und Trocknung von Materialien genutzt wird, die dem Prozess in einem Gegenstromprinzip zugeführt werden, um auch die Verdampfungswärme zurückzugewinnen, die bei der Kondensation von Wasserdampf freigesetzt wird, wobei das in dem Gegenstromerwärmer entstehende Wasser in eine Kollektoreinheit (11) ausgegeben wird.

2. Verfahren nach Anspruch 1, **dadurch gekennzeichnet, dass** die organische Masse in einem Reaktor (2) verkohlt wird, der sauerstofffrei ist oder eine begrenzte Sauerstoffmenge enthält, wobei wenigstens die Kohle (20) und die Gasmischung (30), die durch eine darin ablaufende exotherme Reaktion gebildet wird, voneinander für eine weitere Behandlung getrennt werden, und dass die sich ergebende Kohle (20) bei der Reinigung von Gewässern und als Bodenverbesserer eingesetzt wird.

3. Verfahren nach Anspruch 1 oder 2, **dadurch gekennzeichnet, dass** die in dem Reaktor (2) gebildete Kohle (20) gekühlt wird, von nicht verkohlten Substanzen mittels eines Siebs (4) und/oder einer durchflossenen Unterlage (5) getrennt und gewaschen wird, und umgewandelt wird um für unterschiedliche Anwendungen geeignet zu sein, derart, dass die im Zusammenhang mit der Abkühlung der Kohle (20) freigesetzte thermische Energie zum Trocken und/oder Aufheizen von Materialien, die in den Prozess eingebracht werden, genutzt wird.

4. Verfahren nach einem der Ansprüche 1 bis 3, **dadurch gekennzeichnet, dass** die in dem Reaktor (2) gebildete Gasmischung (30) in einem Nachbrenner (8) verbrannt und die resultierende Energie als elektrische und/oder thermische Energie genutzt wird.

5. Verfahren nach einem der Ansprüche 1 bis 4, **dadurch gekennzeichnet, dass** alle bei dem Prozess abgegebenen Gase gewaschen werden.

6. Vorrichtung zur Reduktion des Ausstoßes von Treibhausgasen, wobei kohlenstoffhaltige Materialien, Holz, Pflanzenteile und daraus hergestellte Produkte und insbesondere Pflanzenabfälle und Siedlungsabfälle, die kaum zur Energieerzeugung geeignet sind, derart behandelbar sind, dass der Ausstoß von Treibhausgasen, insbesondere die Freisetzung von Kohlendioxid zurück in die Atmosphäre wesentlich reduziert und eingeschränkt ist, wobei die Vorrichtung einen Verkohlungsreaktor (2) aufweist, in dem eine organische Masse durch Aufheizen in einem sauerstofffreien Volumen oder einem Volumen mit begrenztem Sauerstoff zu Kohle (20) verkohlbar ist, deren Mengel mehr als 50% des Kohlenstoffgehalts der Trockenmasse beträgt, und zu einer Gasmischung (30); die Vorrichtung umfasst einen Nachbrenner (8) zum Verbrennen der Gasmischung und einen Wärmetauscher (9) zum Rückgewinnen von Energie, wobei anschließend die Verbrennungsgase und unverbrannte Rückstände der Gasmischung (30) derart behandelt werden, dass sie drucklos oder unter Druck kondensieren, **dadurch gekennzeichnet, dass** die bei der Kondensation der Gase freigesetzte thermische Energie so bearbeitet wird, dass sie beim Aufheizen und Trocknen von Materialien genutzt wird, die dem Prozess mittels eines Gegenstromheizers (1) zugeführt werden, um auch die Verdampfungswärme aus der Kondensation von Wasserdampf zurückzugewinnen, der Gegenstromheizer ist in Verbindung mit dem Verkohlungsreaktor mittels einer Zuführleitung (41) für das organische Material, die Vorrichtung umfasst ferner eine Kollektoreinheit (11) zum Empfangen von Wasser von dem Gegenstromheizer.

7. Vorrichtung nach Anspruch 6, **dadurch gekennzeichnet, dass** die in dem Reaktor (2) gebildete Kohle (20) in einem Kühler (3) gekühlt wird, von nicht verkohlten Substanzen mittels eines Siebs (4) und/oder einer durchflossenen Unterlage (5) getrennt wird, in einer Wascheinheit (6) gewaschen wird, und in einer Pellet-Einheit (7) für unterschiedliche Anwendungen passend umgewandelt wird, und dass die im Zusammenhang mit der Abkühlung der Kohle (20) freigesetzte thermische Energie so behandelt wird, dass sie bei dem Heizen und Trocknen der Materialien, die dem Prozess zugeführt werden, ausgenutzt werden kann.

8. Vorrichtung nach Anspruch 6 oder 7, **dadurch gekennzeichnet, dass** der Gegenstromheizer (1) wenigstens zwei drehbare Zylinder oder Trommeln (1a, 1b+1c, 1d) umfasst, in der ersten der Trommeln (1d, 1a) sind die Verbrennungsgase in direktem Kontakt mit der zuzuführenden Masse, und die zweite Trommel (1b+1c), in der die Temperatur der auszustoßenden Gase unter 100°C fällt und Wasserdampf zu Wasser kondensiert, ist mit einer Schale oder einem Mantel (1c) versehen, der außerhalb der den Materialraum begrenzenden Trommel (1b) angeordnet ist und in den das ausgestoßene Gas wandert, ohne in Kontakt mit dem Material zu kommen.

9. Vorrichtung nach Anspruch 8, **dadurch gekennzeichnet, dass** der Mantel der zweiten Trommel (1b+1c) mit einer Wasserauslassöffnung versehen ist, ebenso wie mit einem Auslass für verbleibende Gase, der zu einer dritten Trommel (1a) führt, die Masse wird darin im nassen Zustand eingebracht und die darin einströmende Gasmischung wird so behandelt, dass sie mit warmer Luft ergänzt wird.

10. Vorrichtung nach Anspruch 8 oder 9, **dadurch gekennzeichnet, dass** zwischen den Trommeln (1a, 1b+1c, 1d) Förderschrauben (1e) angeordnet sind, dass die Trommeln in einer geneigten Stellung und in Zuführrichtung geneigt sind, und dass die Trommeln mit schraubenförmigen Leitflächen (1f) versehen sind, die die Förderung der Masse erleichtern.

## Revendications

1. Procédé pour réduire les décharges de gaz à effet de serre, en particulier de dioxyde de carbone, dans lequel des matériaux carbonés, du bois, des éléments de végétation, des produits réalisés à partir de ceux-ci, et en particulier des déchets végétaux et municipaux peu adaptés à une production d'énergie, sont traités d'une manière telle que la libération de dioxyde de carbone vers l'atmosphère est sensiblement réduite et limitée, ledit procédé comprenant :
- la carbonisation d'une masse organique, par chauffage de celle-ci dans un volume sans oxygène ou à teneur en oxygène limitée, en charbon de bois (20), dont la quantité est supérieure à 50 % de la teneur en carbone de la matière sèche, et en un mélange gazeux (30) qui est brûlé,
- la récupération de l'énergie principale des gaz dans un échangeur thermique (9), et
- la condensation de la vapeur d'eau provenant des gaz dans un état sans pression ou sous pression, **caractérisé en ce que** la chaleur libérée lors de la condensation d'un mélange gazeux est mise en oeuvre pour le chauffage et le séchage de matériaux devant être amenés dans le processus sur un principe de contre-courant pour récupérer également la chaleur d'évaporation libérée lors de la condensation de la vapeur d'eau, et l'eau formée dans le dispositif de chauffage à contre-courant est évacuée dans une unité formant collecteur (11).

2. Procédé selon la revendication 1, **caractérisé en ce que** la masse organique est carbonisée dans un réacteur (2) sans oxygène ou contenant une quantité d'oxygène limitée, au moins le charbon de bois (20) et le mélange gazeux (30) formés dans une réaction exothermique produite dans celui-ci étant séparés l'un de l'autre pour un traitement supplémentaire, et **en ce que** le charbon de bois résultant (20) est mis en oeuvre dans la purification de masses d'eau et en tant que conditionneur de sol.

3. Procédé selon la revendication 1 ou 2, **caractérisé en ce que** la charbon de bois (20) formé dans le réacteur (2) est refroidi, séparé des substances non-carbonisées au moyen d'un tamis (4) et/ou d'un lit fluidisé (5), lavé et transformé pour s'adapter à différentes applications, d'une manière telle que l'énergie thermique libérée en association avec le refroidissement du charbon de bois (20) soit exploitée pour le séchage et/ou chauffage des matériaux devant être amenés dans le processus.

4. Procédé selon l'une quelconque des revendications 1 à 3, **caractérisé en ce que** le mélange gazeux (30) formé dans le réacteur (2) est brûlé dans un post-brûleur (8) et l'énergie résultante est utilisée comme énergie électrique et/ou thermique.

5. Procédé selon l'une quelconque des revendications 1 à 4, **caractérisé en ce que** tous les gaz évacués à partir du processus sont purifiés.

6. Appareil pour réduire des décharges de gaz à effet de serre, dans lequel des matériaux carbonés, du bois, des éléments de végétation, des produits constitués à partir de ceux-ci, et en particulier des déchets végétaux et municipaux peu adaptés à une production d'énergie, peuvent être traités d'une manière telle que des décharges de gaz à effet de serre, en particulier la libération de dioxyde de carbone vers l'atmosphère, sont sensiblement réduites et limitées, ledit appareil comportant un réacteur de carbonisation (2), dans lequel une masse organique peut être carbonisée par chauffage dans un volume sans oxygène ou contenant une quantité limitée d'oxygène, en charbon de bois (20), dont la quantité est supérieure à 50 % de la teneur en carbone de la matière sèche, et en un mélange gazeux (30), un post-brûleur (8) pour brûler le mélange gazeux et un échangeur thermique (9) pour récupérer de l'énergie, après quoi les gaz de combustion et ce qui reste non-brûlé du mélange gazeux (30) sont adaptés pour être condensés dans un état sans pression ou sous pression, **caractérisé en ce que** l'énergie thermique libérée lors de la condensation des gaz est adaptée pour être mise en oeuvre pour le chauffage et le séchage de matériaux devant être amenés dans le processus au moyen d'un dispositif de chauffage à contre-courant (1) pour récupérer également la chaleur d'évaporation provenant de la condensation de la vapeur d'eau, le dispositif de chauffage à contre-courant étant en communication avec le réacteur de carbonisation par l'intermédiaire d'un conduit d'alimentation (41) pour la matière organique, l'appareil comportant de plus une unité formant collecteur (11) pour recevoir de l'eau à partir du dispositif de chauffage à contre-courant.

7. Appareil selon la revendication 6, **caractérisé en ce que** le charbon de bois (20) formé dans le réacteur (2) est refroidi dans un dispositif de refroidissement (3), séparé de substances non-carbonisées au moyen d'un tamis (4) et/ou d'un lit fluidisé (5), purifié dans une unité de lavage (6), et transformé dans une unité de mise en pastille (7) de manière appropriée pour différentes applications, et **en ce que** l'énergie thermique libérée en association avec le refroidissement du charbon de bois (20) est adaptée pour pouvoir être mise en oeuvre pour le chauffage et le séchage de matériaux devant être amenés dans le processus.

8. Appareil selon la revendication 6 ou 7, **caractérisé en ce que** le dispositif de chauffage à contre-courant (1) comporte au moins deux cylindres ou tambours aptes à être amenés en rotation (1a, 2b + 1c, 1d), les gaz de combustion étant en contact direct dans le premier (1d, 1a) desdits tambours avec une masse devant être introduite et le deuxième tambour (1b + 1c), dans lequel la température des gaz devant être déchargés tombe en dessous de 100°C et la vapeur d'eau se condense en eau, est muni d'une enveloppe ou d'un manteau (1c), qui est positionné(e) à l'extérieur du tambour (1b) définissant un espace pour le matériau, et dans lequel les gaz de décharge se déplacent sans venir en contact avec le matériau.

9. Appareil selon la revendication 8, **caractérisé en ce que** le manteau dudit second tambour (1b + 1c) est muni d'une sortie d'eau, de même que d'une sortie pour les gaz restants, vers un troisième tambour (1a), la masse acheminée étant acheminée dans celui-ci dans un état humide, et le mélange gazeux passant dans celui-ci étant adapté pour être additionné d'air chaud.

10. Appareil selon la revendication 8 ou 9, **caractérisé en ce qu'**entre les tambours (1a, 1b + 1c, 1d) se trouvent des convoyeurs à vis (1e), **en ce que** les tambours sont dans une position inclinée et en pente dans la direction d'alimentation, et **en ce que** les tambours sont munis d'aubes de guidage hélicoïdales (1f) améliorant l'amenée de la masse.
